# EUROPÄISCHE PATENTANMELDUNG

(11) **EP 0 638 460 A1**
(43) Veröffentlichungstag der Anmeldung: **15.02.1995**
(21) Anmeldenummer: 94102983.7
(22) Anmeldetag: 28.02.1994
(51) Int. Cl.: B60P 3/32, E04B 1/343

(54) **Ringankersystem**

(30) Priorität: 10.08.1993 DE 4326840
(71) Anmelder: NIESMANN+BISCHOFF GmbH, D-56751 Polch (DE)
(72) Erfinder: Kessler, Manfred, D-56220 Urmitz/Rhein (DE)
(74) Vertreter: Reinhard - Skuhra - Weise & Partner

(57) **Zusammenfassung**

Eine Vorrichtung zur winkligen abdeckbaren Verbindung von plattenförmigen Elementen, insbesondere von vorgefertigten und vorlackierten Boden-, Wand- und Dachplatten 11, 12 für ein Wohnmobil, besteht aus einem Seitenwandeinfaßprofil 13 und einem Boden-/Dacheinfaßprofil 36 und einem diesen jeweils zugeordneten Profil 34,43 zur jeweiligen randumgreifenden Befestigung, wobei an dem Seitenwandeinfaßprofil 13 und an dem Boden-/Dacheinfaßprofil 36 jeweils wenigstens ein Anlage- und Befestigungsabschnitt 14, 17, 18, 27; 37, 40 zur schraubenden und/oder klebenden Montage und wenigstens ein Verankerungselement 20, 29 zum Aufrasten von Abdeckprofilen 23, 31 vorgesehen sind.

## Beschreibung

Die Erfindung betrifft eine Vorrichtung zur winkligen, abdeckbaren Verbindung von plattenförmigen Elementen, insbesondere von vorgefertigten Boden-, Wand- und Dachplatten für ein Wohnmobil.

Bisher ist es bei der Montage von Wohnmobilen üblich, diese im Verbindungsbereich an vorgesehenen Randprofilen zu verschweißen und anschließend den Verbindungsbereich und die Platten zu lackieren. Fertigungstechnisch ist dies nicht nur außerordentlich zeitaufwendig, sondern erfordert eine zusätzliche Lackierung. Hinzu kommt, daß insbesondere beim Wohnmobilbau Verbindungsstellen aus ästhetischen Gründen abgedeckt werden müssen, wobei die Abdeckprofilform jeweils auf die Verbindungsverhältnisse abzustimmen ist.

Es besteht somit ein Bedürfnis nach Schaffung einer winkligen, abdeckbaren Verbindung von plattenförmigen Elementen, mit der der Montageaufwand deutlich erleichtert wird.

Erfindungsgemäß führt dieses Ziel bei einer Vorrichtung zur winkligen, abdeckbaren Verbindung von plattenförmigen Elementen, insbesondere von vorgefertigten Boden-, Seitenwand- und Dachplatten für ein Wohnmobil dadurch gelöst, daß ein Seitenwandeinfaßprofil bzw. ein Boden-/Dacheinfaßprofil und ein jeweils zugeordnetes Klemmprofil zur jeweiligen plattenrandumgreifenden Befestigung vorgesehen sind, wobei an dem Seitenwandeinfaßprofil und an dem Boden-/Dacheinfaßprofil jeweils ein Anlage- und Befestigungsabschnitt zur schraubenden und/oder klebenden Montage und Verankerungsanformungen zum Aufrasten von Abdeckprofilen für den Verbindungsbereich vorgesehen sind.

In vorteilhafter Weise ermöglicht die erfindungsgemäße Ausbildung der Vorrichtung die Verwendung von vorlackierten Profilen und Platten und macht damit ein nachträgliches Lackieren überflüssig. Aufgrund der Profilkonzeption der Wand-, Boden- und Dacheinfaßprofile ist kein Schweißen in den Gehrungsecken erforderlich, und Änderungen der Plattenzuordnung im Verbindungsbereich und Justiervorgänge können nach Lösen von Verschraubungen problemlos vorgenommen werden.

Günstig ist weiterhin, daß sich die zu verbindenden Plattenelemente komplett mit Verbindungsprofilen vorfertigen lassen, wobei nicht nur ein vergleichsweise geringeres Gewicht, sondern auch eine preiswertere Herstellung ermöglicht wird. Die Seitenwandplatten und die Dach-, Bodenplatten lassen sich außerordentlich einfach auch von ungeübten Personen nach kurzer Einweisung montieren, und die erfindungsgemäße Konzeption öffnet gleichzeitig den Weg zum Einsatz von Großserienfertigung mittels Robotern. Vorteilhaft ist auch, daß die Abdeckprofile ohne weiteres austauschbar sind und in Form eines Modulsystems eingesetzt werden können.

Die vorgesehenen Anlage- und Befestigungsabschnitte sind aneinander beziehungsweise an dem jeweiligen Plattenrand verschraubbar, und die Klemmprofile sind vorzugsweise mittels Schrauben und die Einfaßprofile mittels Klebung, vorzugsweise mittels doppelt wirkendem Klebeband, befestigbar.

Gemäß einer bevorzugten Ausgestaltung ist bei jedem Einfaßprofil ein nach innen weisender Eingriffsrand für das Klemmprofil in einem sich über die Plattenbreite hinaus erstreckenden Bereich vorgesehen. Hierdurch vereinfacht sich die Montage außerordentlich im Zusammenhang mit dem Anbringen der Einfaßprofile, vor allem für den Vorfertigungsvorgang.

Gemäß einer weiteren bevorzugten Ausgestaltung ist das Seitenwandeinfaßprofil der Anlage- und Befestigungsabschnitte abgewinkelt im Bereich der Plattenrandmitte geformt. Hierdurch ergibt sich vorteilhaft bei der winkligen Verbindung keine bündige Überlappung der plattenförmigen Elemente, sondern ein Versatz mit einer Führungslippe, der ebenfalls zur Montageerleichterung beiträgt und nach Vollendung der Montage durch Abdeckprofile eine abgerundete winklige Verbindung ermöglicht.

Das Seitenwandeinfaßprofil erstreckt sich vorzugsweise über die einzufassende Breite und über den Eingriffsrand hinaus zur Bildung einer weiteren Anlagefläche für das winklig zu verbindende plattenförmige Element, um in günstiger Weise eine ausreichende Verbindungsstatik herzustellen.

Zur Montage vorgesehene Abdeckprofile sind vorzugsweise im Bereich der Anlage- und Befestigunsabschnitte des Seitenwandeinfaßprofils Verankerungselemente angeformt, welche vorzugsweise mit Rastaufnahmen versehen abgewinkelt vorstehen.

Nach einer weiteren Ausgestaltung der Erfindung ist an dem Boden- und Dachplatteneinfaßprofil ein Eingriffsrand für ein Außenabdeckprofil gebildet, das von dem Andrucksprofil des Seitenwandeinfaßprofils vorzugsweise mittels eines Clips gehalten ist.

Vorzugsweise bestehen die Seitenwandeinfaßprofile, das äußere Abdeckprofil und die inneren Klemmprofile aus einem Aluminiumstrangpreßprofil und die inneren Abdeckprofile aus Kunststoff.

Nachfolgend wird die Erfindung unter Bezugnahme auf die beigefügten Zeichnungen näher erläutert. Es zeigen:
- Fig. 1: ein Schnitt durch einen Befestigungsbereich von einer Wandplatte und einer Dachplatte mit innerem und äußerem Abdeckprofil;

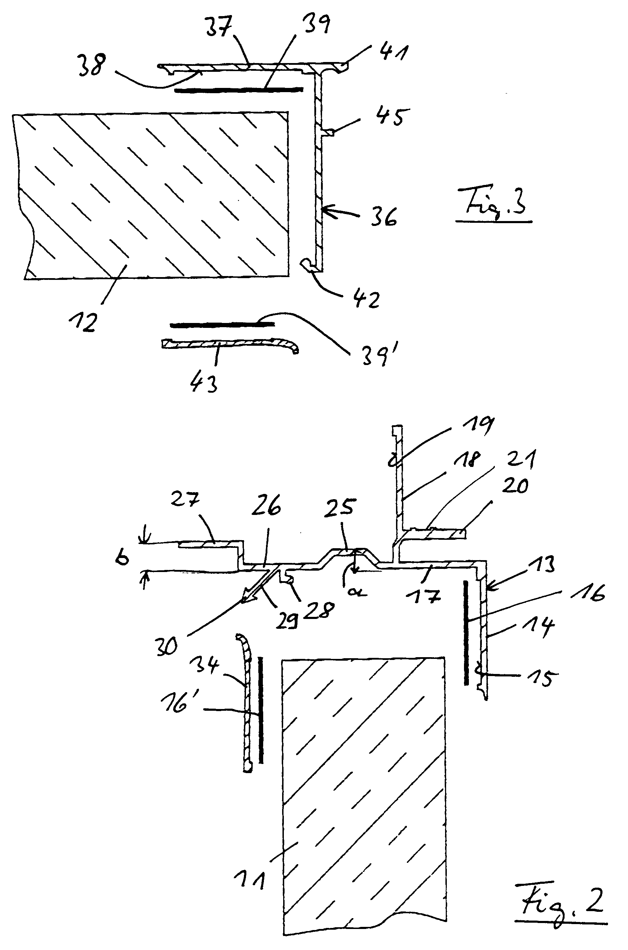

- Fig. 2: eine Darstellung eines Seitenwandabschnittes mit einem daran bestigten Seitenwandeinfaßprofils; und
- Fig. 3: ein Schnitt durch einen Randbereich einer Boden- oder Dachplatte mit dem im Verbindungsbereich angebrachten Einfaßprofil.

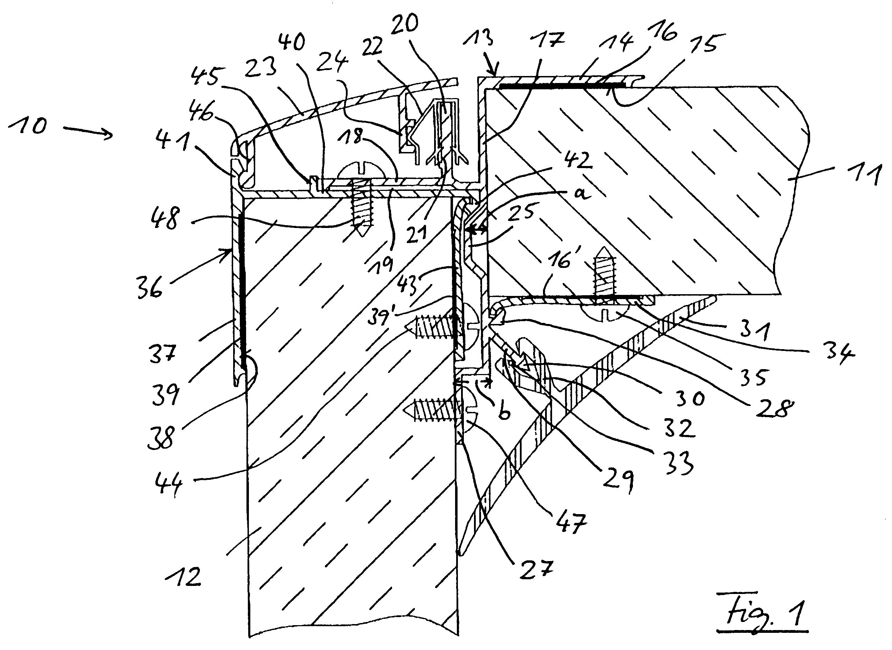

Die Schnittdarstellung von Fig. 1 veranschaulicht eine bevorzugte Ausgestalltung einer erfindungsgemäßen Vorrichtung 10, die zur winkligen abgedeckten Verbindung von einer Wandplatte 11 und einer Dachplatte 12 eingesetzt ist.

Ein Teil der Vorrichtung 10 besteht aus einem Seitenwandeinfaßprofil 13, das im Randbereich der Seitenwand angebracht ist. Das Seitenwandeinfaßprofil 13 besitzt einen abgewinkelten Einfaßabschnitt 14, bei dem im Anlagebereich eine Ausnehmung 15 gebildet ist, in der ein doppelseitiges Klebeband 16 aufgenommen ist, mit dem das Seitenwandeinfaßprofil 13 randseitig an der Seitenwand 11 befestigt ist.

Von dem Einfaßabschnitt 14 erstreckt sich ein abgewinkelter Profilabschnitt 17 parallel zum Rand der Seitenwand 11 etwa bis zur Mitte derselben und geht dort in einen wiederum senkrecht in entgegegesetzter Richtung zu dem Einfaßabschnitt 14 abgewinkelten Anlage- und Befestigungsabschnitt 18 über, an dem eine Ausnehmung 19 ähnlich wie 15 gebildet ist, in die bei Bedarf ebenfalls ein doppelseitiges Klebeband angeordnet wird.

Parallel zu dem Randabschnitt 17 erstreckt sich ein Verankerungsprofil 20, in dem Rastaufnahmen 21 zum Befestigen eines Clips 22 gebildet sind. Der Clip 22 dient zur rastenden, elastischen Befestigung eines äußeren Abdeckprofils 23 und greift an einem entsprechend angeformten Schenkel 24 desselben rastend ein. Die äußere Abdeckung 23 besteht aus einem stranggepreßten Aluminiumprofil.

Das Seitenwandeinfaßprofil 13 ist in randseitiger Verlängerung des Randabschnittes 17 trapezförmig um die Höhe a abgekröpft und setzt sich dann wiederum in der randseitigen Ebene, in der auch der Randabschnitt 17 liegt, von der Kante der Seitenwand 11 bis über dieselbe hinaus in einen Profilabschnitt 26 fort, an den sich ein Anlage- und Befestigungsabschnitt 27 anschließt, der um die Größe b von dem Profilabschnitt 26 nach außen beabstandet ist.

Unterhalb des Profilabschnittes 26 sind ein Eingriffsrand 28 und ein im Winkel von etwa 45 ° angeformtes Verankerungsprofil 29 mit Rastaufnahmen 30 gebildet. Das Verankerungsprofil 29 dient zur aufclippenden Befestigung eines Innenabdeckprofils 31, das seinerseits sowohl an der Seitenwand 11 als auch an der Dachplatte 12 anliegt und an dem ein gabelförmiger Befestigungsabschnitt 32 angeformt ist, der elastisch aufspreizbare Haltenasen 33 besitzt, die Rastanformungen 30 des Verankerungsprofils 29 haltend hintergreifen.

Befestigt ist das Seitenwandeinfaßprofil 13 an der Seitenwand 11 der gezeigten Stellung weiterhin mittes eines elastischen Klemmprofils 34, das ebenso wie das Seitenwandeinfaßprofil 13 aus einem Strangpreßprofil besteht. Das Klemmprofil 34 ragt mit seinem oberen Rand in das Eingriffsprofil 28 und ist in seiner Form derart gewöbt, daß es bei der vorgesehenen Befestigung mittels einer Verschraubung 35 die Seitenwand 11 einspannend gegebenenfalls über ein Doppelklebeband 16' beaufschlagt.

Die Dachplatte 12 besitzt, wie gut in Fig. 3 gezeigt, ein Einfaßprofil 36 mit einem Anlage- und Befestigungsabschnitt 37, der ähnlich wie der Anlage- und Befestigungsabschnitt 14 eine Ausnehmung 38 aufweist, in der ein doppelseitiges Klebeband 39 angeordnet ist. Das Einfaßprofil 36 geht von dem Abschnitt (37) abgewinkelt in einen Randanlageabschnitt 40 über, wobei in dem Abbiegungsbereich ein Eingriffsrand 41 außen in Verlängerung des Abschnittes 37 angeformt ist. Ein weiterer Eingriffsrand 42 ist an dem Randprofil 40 in einem über die Breite der Bodenplatte 12 hinausgehenden Bereich 12 angeformt. Der Eingriffsrand 42 dient, wie der Rand 28, zum Einsetzen eines gewölbten Klemmprofils 43, das mittes einer Verschraubung 44 und seiner elastischen Verformung die Dachplatte 12 zur weiteren Befestigung des Einfaßprofils 36 gegebenenfalls über ein Doppelklebeband 39 beaufschlagt. Der Abschnitt 40 besitzt weiterhin einen nach außen weisenden Steg 45, der, wie Fig. 1 zeigt, als Anschlag für den Anlage- und Befestigungsabschnitt 18 dient.

Fig. 1 zeigt den Eingriff des Außenabdeckprofils 23 in den Eingriffsrand 41 mittels eines angeformten Halteteils 46. Außerdem ist in Fig. 1 gut zu sehen, daß die Profilgestaltung des bei der Verbindung zusammenwirkenden Einfaßprofils 13 derart getroffen ist, daß die Seitenwand 11 und die Dachplatte 12 nicht unmittelbar, sondern um die Größe b versetzt und darüber hinaus auch nicht seitlich bündig aneinander befestigt sind. Die Gestaltung der Profilabschnitte 25 und 26 ist dabei so vorgenommen, daß das Klemmprofil 43 nebst Schraubbefestigung 44 in dem Bereich zwischen den Anlage- und Befestigungsabschnitten 27 und 18 aufgenommen ist.

Der Anlage- und Befestigungsabschnitt 27 ist im fertig montierten Zustand mittels einer Verschraubung 47 an der Dachplatte 12 befestigt, während der Anlage- und Befestigungsabschnitt 18 mittels einer Verschraubung 48 an dem Einfaßprofil 36 und der Dachplatte 12 befestigt ist.

## Patentansprüche

1. Vorrichtung zur winkligen abdeckbaren Verbindung von plattenförmigen Elementen, insbesondere von vorgefertigten und vorlackierten Boden-, Wand- und Dachplatten (11, 12) für ein Wohnmobil, bestehend aus
einem Seitenwandeinfaßprofil (13) und einem Boden-/Dacheinfaßprofil (36) und einem diesen jeweils zugeordneten Profil (34, 43) zur jeweiligen randumgreifenden Befestigung,
wobei an dem Seitenwandeinfaßprofil (13) und an dem Boden-/Dacheinfaßprofil (36) jeweils wenigstens ein Anlage- und Befestigungsabschnitt (14, 17, 18, 27; 37, 40) zur schraubenden und/oder klebenden Montage und wenigstens ein Verankerungselement (20, 29) zum Aufrasten von Abdeckprofilen (23, 31) vorgesehen sind.

2. Vorrichtung nach Anspruch 1, dadurch gekennzeichnet, daß die Anlage- und Befestigungsabschnitte (14, 17, 18, 27; 37, 40) aneinander, beziehungsweise an dem jeweiligen Plattenrand verschraubbar sind.

3. Vorrichtung nach Anspruch 2, daurch gekennzeichnet, daß die Klemmprofile (34, 43) mittels Schrauben (35, 44) und die Einfaßprofile (13, 36) mittels Klebung, vorzugsweise mittels doppeltwirkenden Klebeband (16), befestigbar sind.

4. Vorrichtung nach einem der vorangehenden Ansprüche, dadurch gekennzeichnet, daß an jedem Einfaßprofil (13, 36) ein nach innen weisender Eingriffsrand (28, 42) in einem sich über die Plattenbreite erstreckenden Bereich für das Klemmprofil (34,43) vorgesehen ist.

5. Vorrichtung nach einem der vorangehenden Ansprüche, dadurch gekennzeichnet, daß an das Seitenwandeinfaßprofil (13) ein abgewinkelter Anlage- und Befestigungsabschnitt (18) im Bereich der Plattenrandmitte angeformt ist.

6. Vorrichtung nach einem der vorangehenden Ansprüche, dadurch gekennzeichnet, daß sich das Seitenwandeinfaßprofil (13) über die einzufassende Breite hinaus zur Bildung einer weiteren Anlagefläche (27) für das winklig zu verbindende plattenförmige Element (12) erstreckt.

7. Vorrichtung nach einem der vorangehenden Ansprüche, dadurch gekennzeichnet, daß im Bereich der Anlage- und Befestigungsabschnitte (17, 18, 26) des Seitenwandeinfaßprofils (13) wenigstens ein Verankerungselement (20, 29) angeformt ist.

8. Vorrichtung nach Anspruch 7, dadurch gekennzeichnet, daß jedes Verankerungselement (20, 29) abgewinkelt mit Rasteaufnahmen (21, 30) versehen vorsteht.

9. Vorrichtung nach einem der vorangehenden Ansprüche, dadurch gekennzeichnet, daß an dem Boden- und Dachplatteneinfaßprofil (36) ein Eingriffsrand (41) für das Außenabdeckprofil (23) gebildet ist, das von dem Verankerungselement (20) des Seiteneinfaßprofils (13) vorzugsweise mittels eines Clips (22) gehalten ist.

10. Vorrichtung nach einem der vorangehenden Ansprüche, dadurch gekennzeichnet, daß die Einfaßprofile (13, 36) und Klemmprofile (34, 43) sowie das äußere Abdeckprofil (23) aus einem Aluminiumstrangpreßprofil und das innere Abdeckprofil (31) aus einem Kunstsotffprofil bestehen.
